# EUROPÄISCHE PATENTSCHRIFT

(11) **EP 2 251 456 B1**
(45) Veröffentlichungstag und Bekanntmachung des Hinweises auf die Patenterteilung: **30.11.2016**
(21) Anmeldenummer: 10172067.0
(22) Anmeldetag: 17.03.2004
(51) Int. Cl.: C23C 22/73, C23C 22/68, C23C 22/66, C23C 22/34, B23K 35/36

(54) **VERFAHREN ZUR HERSTELLUNG UND VERBINDUNG OBERFLÄCHENMODIFIZIERTER METALLISCHER WERKSTÜCKE**
PROCESS FOR PREPARING AND JOINING SURFACE MODIFIED METALLIC WORK PIECES
PROCÉDÉ POUR PRÉPARER ET JOINDRE DES PIÈCES MÉTALLIQUES MODIFIÉES EN SURFACE

(30) Priorität: 31.03.2003 DE 10314700
(43) Veröffentlichungstag der Anmeldung: 17.11.2010
(62) Teilanmeldung aus: 04739066.1
(73) Patentinhaber: MAHLE Behr GmbH & Co. KG, 70469 Stuttgart (DE)
(72) Erfinder: Dr. Boger, Snjezana, 73734, Esslingen (DE); Englert, Peter, 74177, Bad Friedrichshall (DE); Dipl.-Ing. Pfitzer, Matthias, 73779, Deizisau (DE); Dipl.-Ing. (FH) Sedlmeir, Sabine, 72270, Baiersbronn (DE); Trautwein, Ingo, 74321, Bietigheim-Bissingen (DE)
(74) Vertreter: Grauel, Andreas

(56) Entgegenhaltungen:
- EP-A- 0 163 471
- EP-A- 0 781 860
- WO-A-99/48641
- WO-A-03/048403
- DE-A1- 2 909 698
- DE-A1- 10 044 454
- GB-A- 863 098
- GB-A- 1 076 678
- US-A- 2 809 423
- US-A- 4 446 057
- US-A- 5 532 024
- US-A- 5 750 197
- US-A- 5 820 015
- DATABASE WPI Section Ch, Week 198906 Thomson Scientific, London, GB; Class M23, AN 1989-043956 XP002601450 -& JP 63 317297 A (KANTO-YAKIN KOGYO K) 26. Dezember 1988 (1988-12-26)
- PATENT ABSTRACTS OF JAPAN Bd. 0081, Nr. 14 (C-225), 26. Mai 1984 (1984-05-26) -& JP 59 028575 A (HONDA GIKEN KOGYO KK), 15. Februar 1984 (1984-02-15)

## Beschreibung

Die vorliegende Erfindung betrifft Verfahren zur Herstellung oberflächenmodifizierter Werkstücke aus Metall und/oder einer oder mehrerer Legierungen, sowie Verfahren zur Verbindung zumindest zweier solcher Werkstücke.

Die direkte Beschichtung von Aluminium oder Aluminiumlegierungen mittels organischer Beschichtungssysteme ist aufgrund der geringen Haftfähigkeit der organischen Beschichtungssysteme auf dem Aluminium nahezu unmöglich. Zur Verbesserung der Haftvermittlung zwischen Ausgangswerkstoff und organischen Beschichtungssystemen ist es daher bekannt, Aluminium oder Aluminiumlegierungen einer sogenannten Böhmit-Behandlung zu unterziehen, wobei heißes Wasser oder heißer Dampf, gegebenenfalls zusammen mit Ammoniak oder Aminen, mit dem Werkstück in Verbindung gebracht wird, so dass eine Aluminiumoxid- bzw. Böhmit-Schicht gebildet beziehungsweise verstärkt wird. Diese ermöglicht dann das Aufbringen einer organischen Beschichtung. Die EP 1 142 663 A1 beschreibt Böhmitverfahren, im Rahmen derer deionisiertes Wasser bei Temperaturen von etwa 100°C oder Dampf bei Temperaturen von 150°C eingesetzt wird, um Aluminiumteile oberflächlich zu modifizieren. Aus der US 3,945,899 geht eine Böhmit-Behandlung von Aluminiumteilen mit Wasser einer Temperatur von 65 bis 100°C beziehungsweise Dampf mit Temperaturen von 100 bis 180°C hervor, wobei der Zusatz von Aminen und Ammoniak eine nochmalige Verstärkung der Aluminiumoxidschicht bewirkt.

Aus dieser Schrift ist es auch bekannt, Aluminium oder dessen Legierungen einer chemischen Oberflächenbehandlung unter Einsatz von wässrigen Lösungen von Chromaten oder Phosphaten zu unterziehen, um auf diese Weise einerseits die Haftfähigkeit zu erhöhen und andererseits die Korrosionsanfälligkeit zu reduzieren. Diese sogenannte Konversionsbehandlung ist auch aus Stolzenfels (Industrie-Lackierbetrieb, Nr. 3, Seite 93-98, Curt R. Vincentz Verlag) bekannt, welche Chromatierungen von Aluminium-Werkstücken bei Temperaturen von 20 bis 50°C beschreibt. Riese-Meyer et al. (Aluminium 1991, Nr. 12, Seite 1215-1221) beschreibt chemische Konversionsbehandlungen mittels schichtbildender Phosphatierungen und Chromatierungen, wodurch die Lackhaftung und der Korrosionsschutz von Aluminium-Werkstücken verbessert werden können. Auch gemäß dieser Druckschrift wird die Chromatierung bei einer Temperatur von 20 bis 30°C beziehungsweise 30 bis 40°C durchgeführt.

Die DE 195 48 740 A1 beziehungsweise die zugehörige Nachanmeldung EP 0 781 860 A1 offenbaren ein Verfahren zur Oberflächenbehandlung von Aluminium und Aluminiumlegierungen. Das Verfahren wird dabei für mechanisch hochfeste Verbindungen mit Reaktionsharzsystemen verwendet. Dabei wird die Metall- oder Legierungsoberfläche zuerst mechanisch aufgeraut und entfettet. Anschließend wird das Metall oder die Legierung in deionisiertem Wasser im Temperaturbereich von Raumtemperatur bis ca. 200°C hydratisiert und anschließend einer Temperaturbehandlung bei Temperaturen unterhalb der Rekristallisationstemperatur von Aluminium beziehungsweise Aluminiumlegierungen unterzogen.

Die Druckschrift CH 295 082 A offenbart ein Verfahren zur Behandlung von Aluminiumtuben. Diese Tuben werden vor der Verwendung einer Behandlung unterzogen, um sie gegen korrodierende Angriffe widerstandsfähiger zu machen. Zur Behandlung wird Wasser in unterschiedlichen Aggregatszuständen verwendet.

Die US 5 496 417 A offenbart ein Verfahren zur Beschichtung von Aluminium oder Aluminiumlegierungen vor. Ziel des Verfahrens ist die Reduzierung der Empfindlichkeit gegenüber Korrosion und Abrieb und die Erhöhung der Haftung. Hierzu wird ein Fluidstrom von dampfförmigem deionisiertem Wasser in eine Kammer geleitet. Der Fluidstrom wird durch das Auftreffen in der Kammer auf eine Blende verwirbelt. Die zu behandelnde Oberfläche wird dann dem verwirbelten Fluidstrom ausgesetzt.

Die KR 950 006 282 B1 offenbart eine Methode zur Sauerstoffentfernung während eines Konversions- Beschichtungsprozesses von Aluminiumfolie. Durch die Sauerstoffentfernung werden entstehende Leckageströmungen reduziert und die Spannungsfestigkeit der Aluminiumfolie erhöht, indem die Aluminiumfolie erhitzt wird und mit Wasser, welches eine Temperatur von 90°C bis 95°C aufweist gespült wird.

Die EP 1 142 663 A1 offenbart eine Methode zur Verbesserung der Verbindbarkeit von Aluminiumkomponenten. Dabei hat das Aluminium eine Reinheit von mindestens 95%. Die Methode umfasst einen Lötvorgang zur Verbindung der Komponenten wobei die verbundenen Komponenten anschließend durch eine Boehmitting-Prozedur an den Oberflächen behandelt werden.

Die vorgenannten Verfahren erweisen sich jedoch unter anderem aufgrund energetischer Überlegungen als nachteilig. Da die gemäß dem Stand der Technik zu modifizierenden Werkstücke in der Regel Raumtemperatur aufweisen, d.h. gegenüber einem vorhergehenden Löt- oder Fügeprozess in abgekühltem Zustand eingesetzt werden, ergibt sich ein erhöhter Handhabungs- und Zeitbedarf bei der Oberflächenmodifizierung solcher Werkstücke. Überdies neigen die im Stand der Technik zu modifizierenden Formkörper aus Aluminium oder Aluminiumlegierungen aufgrund des nach der Herstellung durchgeführten langsamen Abkühlprozesses zur sogenannten Grobkornbildung.

Der vorliegenden Erfindung liegt daher das technische Problem zugrunde, die vorgenannten Nachteile überwindende Verfahren bereitzustellen, insbesondere Verfahren bereitzustellen, die in kostengünstigerer Weise haftverbesserte und/oder korrosionsgeschütztere Werkstücke aus Aluminium, Magnesium, Kupfer oder einer oder mehreren Aluminium und/oder Magnesium- und/ oder Kupferlegierungen bereitstellen, insbesondere solche, deren Struktur sich bei gleicher oder verbesserter Korrosionsbeständigkeit und Haftvermittlung durch eine verringerte Grobkornbildung im Vergleich zu herkömmlich hergestellten Aluminium- oder Aluminiumlegierungs-Werkstücken auszeichnet.

Die vorliegende Erfindung löst das ihr zugrundeliegende technische Problem durch die Bereitstellung eines Verfahrens zur Herstellung oberflächenmodifizierter Werkstücke gemäß Patentanspruch 1. Besondere Ausführungsformen der Erfindung sind in den Patentansprüchen 2-6 angegeben.

Die Erfindung löst das ihr zugrundeliegende Problem also insbesondere dadurch, dass ein an seiner Oberfläche zu modifizierendes Werkstück mit einer relativ hohen Temperatur bereitgestellt wird und mit mindestens einem modifizierenden Mittel, welches eine niedrigere Temperatur aufweist, in Kontakt gebracht wird, wobei ein oberflächenmodifiziertes Werkstück hergestellt wird.

Im Zusammenhang mit der vorliegenden Erfindung wird unter einem Werkstück ein beliebig ausgebildeter Gegenstand verstanden, der beispielsweise als Formkörper, also Körper definierter Gestalt, aber auch als Granulat oder Pulver vorliegen kann. In bevorzugter Ausführungsform liegt das Werkstück als Wärmetauscher oder wesentlicher Bestandteil desselben vor.

Gemäß vorliegender Erfindung ist das zu modifizierende Werkstück aus Aluminium, Magnesium, Kupfer oder einer oder mehreren Aluminium- und/oder Magnesium- und/oder Kupferlegierungen aufgebaut, d.h. besteht aus Aluminium oder einer oder mehreren Legierungen oder enthält Aluminium oder eine oder mehrere Aluminiumlegierungen im Wesentlichen, zum Beispiel in Anteilen zu mindestens 50, 60, 70, 80, 90, 95 und insbesondere 99 Gew.-%, bezogen auf das Gewicht des Werkstückes.

Die Erfindung sieht in ihrer ersten Ausgestaltung vor, dass das Werkstück, dessen Oberfläche zu modifizieren ist, in erhitzter Form bereitgestellt wird, wobei das zu modifizierende Werkstück eine Temperatur von 300 bis 550°C aufweist. Dies kann in einer bevorzugten Ausführungsform dadurch erreicht werden, dass das Werkstück in noch heißer Form direkt im Anschluss an seinen Herstellprozess, z.B. nach dem Austritt aus einer Lötzone, nach thermischen Fügeprozessen, oder nach Aufheizen in Kammeröfen unter Ausnutzung vorhandener Wärmekapazität dieser Werkstücke erfindungsgemäß eingesetzt wird. Das eine der vorgenannten Temperaturen, zum Beispiel eine Temperatur von 300 bis 550°C aufweisende Werkstück wird also unter Ausnutzung seiner noch vorhandenen erhöhten Temperatur behandelt, d.h. mit mindestens einem oberflächenmodifizierenden Mittel so in Kontakt gebracht, dass die angestrebte Oberflächenmodifikation des Werkstückes erreicht wird.

Die erfindungsgemäß angestrebte Oberflächenmodifikation ist dabei eine chemische Konversion, das heißt die Ausbildung einer Konversionsschicht und/oder eine Ausbildung oder Verstärkung einer Böhmitschicht oder Aluminiumoxidschicht. Die erfindungsgemäß angestrebte Oberflächenmodifizierung kann in einer bevorzugten Ausführungsform auch in dem Einbau korrosionsinhibierender Stoffe in die Aluminiumoxid- beziehungsweise Böhmitschicht liegen, und/oder in der Erzeugung von Konversionsschichten durch chemisch- physikalische Modifizierung gegebenenfalls vorhandener Flussmittelschichten.

So kann vorgesehen sein, dass Werkstücke, die aufgrund eines vorhergehenden CAB-Lötverfahrens bereits eine CAB-Flussmittelschicht aufweisen, mittels der erfindungsgemäßen Vorgehensweise dergestalt behandelt werden, dass die vorhandene CAB-Flussmittelschicht chemisch-physikalisch modifiziert wird. Die erfindungsgemäße Vorgehensweise kann in einer Dotierung der vorhandenen Flussmittelschicht, zum Beispiel mit Metallen der Hauptgruppen I, II, III oder IV oder der Nebengruppen, insbesondere IV bis VI oder/und einer Erhöhung des Sauerstoff-Anteils resultieren. Die Behandlung resultiert unter anderem in einer verbesserten Korrosionsbeständigkeit.

Der erfindungsgemäße Einsatz eines modifizierenden Mittels mit einer geringen Temperatur von 80°C bis 100°C, führt bei Behandlung eines Werkstückes mit einer hohen Temperatur von 300°C bis 550°C zu einer raschen Abkühlung des Werkstückes und damit in vorteilhafter Weise zu einer Unterdrückung beziehungsweise Reduzierung der Grobkornbildung im Werkstück. Die erhaltenen Werkstücke unterscheiden sich daher unter Umständen in ihrer Struktur vorteilhaft von in herkömmlicher Weise hergestellten Werkstücken.

Die erfindungsgemäß vorgesehene Behandlung von Flussmittel (CAB)-beschichteten Werkstücken führt unter Umständen zu einem vorteilhaften schuppigen, geschlossenen und abgerundeten Erscheinungsbild der Flussmittelschicht des Aluminiumteils, das sich von dem offenporigen, kantigen und plättchenartigen Erscheinungsbild unbehandelte Flussmittelbeschichteter Aluminiumteile unterscheidet.

In der vorliegenden Erfindung wird das vorliegende technische Problem gelöst durch Bereitstellung eines Verfahrens zur Herstellung oberflächenmodifizierter Werkstücke aus einem Metall und/oder einer oder mehreren Legierungen, umfassend das Bereitstellen des zu modifizierenden Werkstückes und das Behandeln dieses Werkstückes mit mindestens einem modifizierenden Mittel zum Erhalt eines oberflächenmodifizierten Werkstückes, wobei das mindestens eine modifizierende Mittel eine Temperatur von 80 bis 100°C aufweist.

Das zu modifizierende Werkstück weist eine Temperatur von 300 bis 550°C auf. Die Erfindung ermöglicht die vorteilhafte Oberflächenmodifikation eines Werkstückes, insbesondere die Erzeugung einer Metalloxid- oder Böhmitschicht, die Verstärkung einer vorhandenen Metalloxid- oder Böhmitschicht, den Einbau korrosionsinhibierender Stoffe in eine Metalloxid- oder Böhmitschicht und/oder die Erzeugung von Konversionsschichten durch chemisch-physikalische Modifikation, insbesondere von Flussmittelschichten.

Nach der Oberflächenmodifikation des Werkstückes können die Werkstücke in üblicher Weise weiterbehandelt, insbesondere gespült und getrocknet werden. Es kann selbstverständlich auch eine weitere Beschichtung, zum Beispiel mittels organischer Beschichtungssysteme erfolgen. Das vorliegende Verfahren stellt also einen Ausschnitt aus dem Herstellprozess eines Werkstückes, zum Beispiel eines Wärmetauschers, dar. Die erfindungsgemäß vorgesehene Herstellweise führt im Rahmen dieses Herstellverfahrens zu einer Verringerung der Herstellkosten für Werkstücke, zur Einsparung von Energie und Ressourcen, insbesondere durch Nutzung vorhandener Wärmekapazitäten der Werkstücke und zum reduzierten Einsatz beziehungsweise zur Vermeidung des Einsatzes von aggressiven Chemikalien zur Oberflächenbehandlung.

Erfindungsgemäß ist es vorgesehen, als modifizierendes Mittel zur Behandlung der Oberfläche des Werkstücks Wasser zu verwenden. Das modifizierende Mittel weist dabei ein CAB-Flussmittel auf.

In einer alternativen Ausgestaltung können als modifizierendes Mittel unter Umständen alle bekannten chemischen Elemente, Verbindungen, Gemische oder sonstige Zusammensetzungen in Frage kommen. Ein vorzugsweise eingesetztes modifizierendes Mittel ist eine oder mehrere Verbindungen, insbesondere ein oder mehrere Metallsalze eines oder mehrerer Elemente der Nebengruppen des PSE, insbesondere der Nebengruppen IV bis VI des PSE (Periodensystem der Elemente), zum Beispiel Titan, Hafnium, Vanadium, Tantal, Molybdän, Wolfram und insbesondere Zirkonium.

In einer weiteren alternativen Ausgestaltung kann das modifizierende Mittel eine oder mehrere Verbindungen, insbesondere ein oder mehrere Metallsalze eines oder mehrerer Elemente der Hauptgruppen I, II, III und/oder IV des Periodensystems der Elemente sein, zum Beispiel ein Metallsalz von Beryllium, Barium, insbesondere von Magnesium oder Calzium oder Natrium oder Kalium.

In einer anderen alternativen Ausgestaltung kann das modifizierende Mittel eine oder mehrere Verbindungen eines oder mehrerer Elemente der Hauptgruppen V, VI, VII und/oder VIII des Periodensystems der Elemente sein.

In weiteren alternativen Ausgestaltungen können die vorgenannten Metalle in Salzform mit Anionen ausgewählt aus der Gruppe bestehend aus Chloriden, Carbonaten, insbesondere Hydrogencarbonaten, Nitraten, Sulfaten, Peroxiden und Phosphaten vorliegen. Insbesondere die Metallsalze der Elemente der Hauptgruppe I und II, zum Beispiel Kalium, Natrium und Kalzium, können als Lauge, also KOH, NaOH oder Ca(OH)₂, oder als Borat, Aluminat, Silikat oder Halogenid, insbesondere Fluorid, vorliegen.

In einer weiteren bevorzugten Ausführungsform der Erfindung ist das dem modifizierenden Mittel zugegebene CAB-Flussmittel ("controlled atmosphere brazing") ein CAB-Flussmittel der allgemeinen Formel KₓAl Fy mit x gleich 1 bis 3 und y = 4 bis 6, zum Beispiel Kaliumaluminiumhexafluorid und/oder CsₓAlF_{y}.

In einer weiteren alternativen Ausführungsform wird als modifizierendes Mittel ein Ammoniumsalz, wie beispielsweise Ammoniumfluorid oder Ammoniumcarbonat, Kaliumfluorid, Natrium- oder Kaliumsilikat, Natrium- oder Kaliumborat, Natrium- oder Kaliumaluminat, vernetzbare, insbesondere metallorganische, wie beispielsweise zirkon- oder titanorganische, oder siliziumorganische Verbindungen oder auch Wasserstoffperoxid eingesetzt.

In einer alternativen Ausführungsform werden zur Behandlung des Werkstückes das CAB-Flussmittel, Ammoniumsalz und/oder Kaliumfluorid in alkalischer Phase insbesondere in Form wässriger bevorzugt alkalischer Lösungen oder alkalischer Dämpfe oder Aerosole eingesetzt.

Die Metallverbindungen eines der Elemente der Nebengruppen, insbesondere Nebengruppen IV bis VI, beziehungsweise der Hauptgruppe I, II, III oder IV können in organischer und/oder anorganischer Phase, vorzugsweise in wässriger Phase vorliegen, insbesondere in flüssiger oder gasförmiger Phase, vorzugsweise in Aerosolform oder als Dampf. Das zur Lösung eingesetzte Wasser ist vorzugsweise vollentsalztes Wasser.

In einer alternativen Ausführungsform ist es auch möglich, als oberflächenmodifizierendes Mittel wässrige Lösungen von Ammoniak, von Aminen, insbesondere primären, sekundären oder tertiären Aminen, zum Beispiel Mono-, Di- oder Triethanolamine, Dimethylethanolamine, organischen Säuren oder Salzen von Ammoniak, Aminen, halogenierten organischen Verbindungen und/oder organischen Säuren einzusetzen. Selbstverständlich können auch Gemische der vorgenannten modifizierenden Mittel eingesetzt werden.

Bevorzugt kommt eine Lösung von 0,1 - 1 % KOH und/oder 0,1 - 1 % NH₄OH und/oder 0,1 - 1 % KₓAlF_{y} (x = 1 bis 3, y = 4 bis 6) und/oder 0,1 - 1 % Ca (NO₃)₂ und/oder 0,1 - 1 % Salze der Elemente der Nebengruppen IV bis VI des PSE in vollentsalztem Wasser zum Einsatz.

In einer weiteren alternativen Ausgestaltung wird als Ausgangswerkstück für das erfindungsgemäße Verfahren ein aus einem CAB-Lötverfahren resultierendes CAB-Flussmittel beschichtetes Werkstück verwendet, welches mit einem oder mehreren der eingesetzten modifizierenden Mitteln unter den angegebenen Bedingungen behandelt wird. Dabei kann insbesondere bei Behandlung der Oberfläche mit Wasser oder wässrigen Lösungen eine modifizierte Oberfläche mit einem erhöhten Sauerstoffanteil erhalten werden, wobei diese je nach Art des eingesetzten modifizierenden Mittels auch dotiert sein kann, zum Beispiel mit einem oder mehreren der Metalle der Hauptgruppe I, II, III oder IV oder der Nebengruppen, insbesondere der Nebengruppen IV bis VI, oder sonstiger eingesetzter modifizierender Mittel.

Eine weitere alternative Ausführungsform sieht vor, dass das Metallsalz, das CAB-Flussmittel, Ammoniumsalz und/oder Kaliumfluorid oder ein anderer Bestandteil des modifizierenden Mittels in einer Matrix, zum Beispiel einer Matrix aus organischen und/oder anorganischen Lösemitteln oder Mischungen davon zur Behandlung der Oberfläche des Werkstückes eingesetzt wird. Die Matrix enthält dabei metallorganische, insbesondere siliziumorganische Verbindungen. Insbesondere enthält die Matrix organische und/oder anorganische Polymere, oder auch ein Gemisch der genannten Stoffe.

In einer alternativen Ausführungsform ist vorgesehen, das Metallsalz, das CAB-Flussmittel, Ammoniumfluorid und/oder Kaliumfluorid oder ein anderer Bestandteil des modifizierenden Mittels bei der Behandlung in einer Konzentration von 10 ppm bis 100000 ppm, bevorzugt von 50 ppm bis 10 000 ppm, einzusetzen.

Das mindestens eine modifizierende Mittel wird mit dem zu modifizierenden Werkstück vorzugsweise in Kontakt gebracht, indem das Werkstück in das mindestens eine Mittel eingetaucht und imprägniert wird, oder indem es mit dem mindestens einen modifizierenden Mittel gespült oder geflutet und dabei imprägniert wird, oder indem das mindestens eine modifizierende Mittel auf das Werkstück gesprüht wird, insbesondere mittels sogenannter Airless- oder Ultraschall-Zerstäubung oder in sonstiger Form in Kontakt gebracht wird.

In einer besonderen Ausführungsform kann vorgesehen sein, das modifizierende Mittel unter gegenüber Atmosphärendruck erhöhtem Druck auf das Werkstück einwirken zu lassen. Bei einer Besprühung kann neben Druckluft auch ein anderes Gas zum Einsatz kommen, zum Beispiel Sauerstoff, Stickstoff, Fluor, Ozon oder Dampf.

Als Metallsalze finden beispielsweise wässrige Lösungen von Ca(NO₃)₂ oder Zr(NO₃)₄ Verwendung, insbesondere mit Konzentrationen zwischen 0,1% und 5%, wobei deren pH-Wert bevorzugt zwischen 5,5 und 7,5 bis 8 liegt. Die Anwendungstemperatur liegt dabei vorteilhafterweise zwischen 40°C und 60°C. Auch ist es unter Umständen von Vorteil, 0,005% bis 5% Tetraethylammoniumtetrafluoroborat zuzufügen.

Insbesondere wird mit einer solchen Lösung ein gelöteter, vorzugsweise CAB-gelöteter Wärmeübertrager behandelt.

Gemäß einer vorteilhaften Ausführungsform weist das zumindest eine modifizierende Mittel ein Biozid auf. Beispielsweise bei einem Wärmeübertrager in einer Heizungs- und/oder Klimaanlage ist eine hierdurch resultierende Keimhemmung erwünscht.

Gemäß einer weiteren vorteilhaften Ausführungsform wird durch das modifizierende Mittel eine oxidationshemmende Wirkung erreicht, indem das Mittel einen Oxidationshemmer aufweist oder mittels des erfindungsgemäßen Verfahrens auf der Oberfläche aufweist. Ein Oxidationshemmer ist beispielsweise durch eine Metalloxid- oder Böhmitschicht gegeben.

Die Erfindung betrifft selbstverständlich auch mittels der vorgenannten Verfahren hergestellte oberflächenmodifizierte Werkstücke, insbesondere oberflächenmodifizierte Wärmetauscher aus Aluminium oder Aluminiumlegierungen.

In vorteilhafter Weiterbildung der Erfindung wird das oberflächenmodifizierte Werkstück in einem weiteren Schritt mit einem oder mehreren organischen oder anorganischen Beschichtungssystemen versehen, welches besonders vorteilhaft keimhemmende und/oder hydrophile oder hydrophobe Eigenschaften aufweist. Ein Aufbringen solcher lackähnlichen Schichten ist sowohl ohne als auch mit einem dazwischenliegenden Trocknungsschritt möglich.

In einer vorteilhaften Weiterbildung ist ein Verfahren zur Verbindung zweier oder auch mehrerer Werkstücke vorgesehen. Ein Fertigungsprozeß, der ein solches Verfahren beinhaltet, ist schnell durchführbar, so daß ein Fertigungsaufwand reduzierbar ist. Dies gilt insbesondere für Verfahren zur stoffschlüssigen Verbindung mehrerer Werkstücke, ist jedoch auch bei anderen Verbindungsverfahren wie beispielsweise mechanischem Fügen gegeben, wobei unter Umständen die Notwendigkeit eines (Wieder-) Aufheizens des Werkstücks zur Anwendung des erfindungsgemäßen Verfahrens besteht.

In einer alternativen Ausgestaltung kann eine Vorrichtung zum stoffschlüssigen Verbinden zumindest zweier Werkstücke vorgesehen sein, bei der eine Temperierkammer für eine Temperierung, insbesondere Erwärmung, der Werkstücke eine Einrichtung zum Aufbringen eines oberflächenmodifizierenden Mittels auf zumindest eines der Werkstücke aufweist. Vorteilhaft dient die Temperierkammer gleichzeitig dem stoffschlüssigen Verbinden, wie beispielsweise Verlöten oder Verschweißen, und der Oberflächenmodifikation der Werkstücke.

Bevorzugt ist die Einrichtung zum Aufbringen eines oberflächenmodifizierenden Mittels als Sprühdüse ausgebildet, die zur Durchführung des erfindungsgemäßen Verfahrens besonders bevorzugt selbst temperierbar ist. Genauso gut ist eine Temperierung des oberflächenmodifizierenden Mittels in einer Zuleitung der Einrichtung möglich.

Im Übrigen ist die Vorrichtung unter Umständen auf bekannte Weise aufgebaut, beispielsweise nach Art eines Vakuum- oder eines Durchlauflötofens. Weitere vorteilhafte Ausgestaltungen der vorliegenden Erfindung ergeben sich aus den Unteransprüchen.

## Patentansprüche

1. Verfahren zur Herstellung oberflächenmodifizierter Werkstücke aus Aluminium, Magnesium, Kupfer oder einer oder mehreren Aluminium- und/oder Magnesium- und/oder Kupferlegierungen, umfassend das Bereitstellen des zu modifizierenden Werkstückes und das Behandeln dieses Werkstückes mit mindestens einem modifizierenden Mittel zum Erhalt des oberflächenmodifizierten Werkstückes, wobei das bereitgestellte zu modifizierende Werkstück eine Temperatur von 300 bis 550°C und das mindestens eine modifizierende Mittel eine Temperatur von 80°C bis 100°C aufweist, wobei als modifizierendes Mittel Wasser verwendet wird und das modifizierende Mittel ein CAB-Flussmittel aufweist.

2. Verfahren nach Anspruch 1, wobei die Behandlung des Werkstückes durchgeführt wird, indem das mindestens eine modifizierende Mittel als Aerosol und/oder Dampf mit dem Werkstück in Kontakt gebracht wird.

3. Verfahren nach einem der vorhergehenden Ansprüche, wobei die Behandlung des Werkstückes durchgeführt wird, indem das Werkstück in das mindestens eine in Form einer wässrigen Lösung vorliegende modifizierende Mittel getaucht oder mit diesem geflutet wird.

4. Verfahren nach Anspruch 1, 2 oder 3, wobei das oberflächenmodifizierte Werkstück mit einem organischen oder anorganischen Beschichtungssystem versehen wird.

5. Verfahren nach Anspruch 4, wobei das Beschichtungssystem ein Biozid aufweist und/oder hydrophile oder hydrophobe Eigenschaften aufweist.

6. Verfahren zur stoffschlüssigen Verbindung zumindest zweier Werkstücke aus Aluminium, Magnesium, Kupfer oder einer oder mehreren Aluminium- und/oder Magnesium- und/oder Kupferlegierungen, umfassend die Schritte a) Bereitstellen der Werkstücke, b) stoffschlüssiges Verbinden, wie Verlöten oder Verschweißen, der Werkstücke miteinander und c) Oberflächenmodifizieren zumindest eines der Werkstücke, wobei die Schritte b) und c) gemeinsam durchgeführt werden und Schritt c) nach einem der Ansprüche 1 bis 5 durchgeführt wird.

## Claims

1. A method for the production of surface-modified workpieces from aluminium, magnesium, copper or one or more aluminium and/or magnesium and/or copper alloys, comprising the provision of the workpiece to be modified and the treatment of the said workpiece with at least one modifying agent to obtain the surface-modified workpiece, wherein the provided workpiece to be modified has a temperature of 300 to 550°C and the at least one modifying agent has a temperature of 80°C to 100°C, wherein water is used as modifying agent and the modifying agent contains a CAB flux.

2. The method according to claim 1, wherein the workpiece is treated by bringing the at least one modifying agent into contact with the workpiece in the form of an aerosol and/or vapour.

3. The method according to any of the preceding claims, wherein the workpiece is treated by immersing it into or flooding it with the at least one modifying agent, which is present in the form of an aqueous solution.

4. The method according to claim 1, 2 or 3, wherein an organic or inorganic coating system is applied to the surface-modified workpiece.

5. The method according to claim 4, wherein the coating system contains a biocide and/or has hydrophilic or hydrophobic properties.

6. A method for joining at least two workpieces from aluminium, magnesium, copper or one or more aluminium and/or magnesium and/or copper alloys by adhesive force, comprising the steps of a) providing the workpieces, b) joining the workpieces by adhesive force such as soldering or welding and c) surface-modifying at least one of the workpieces, wherein the steps b) and c) are performed together and step c) is performed according to one of claims 1 to 5.

## Revendications

1. Procédé de fabrication de pièces d'usinage modifiées en surface, se composant d'aluminium, de magnésium, de cuivre ou d'un ou de plusieurs alliages d'aluminium et / ou de magnésium et / ou de cuivre, ledit procédé comprenant l'approvisionnement de la pièce d'usinage à modifier et le traitement de cette pièce d'usinage avec au moins un moyen de modification, pour l'obtention de la pièce d'usinage modifiée en surface, où la pièce d'usinage approvisionnée, à modifier, présente une température de 300 à 550°C, le moyen de modification au moins au nombre de un présentant une température de 80°C à 100°C, où de l'eau est utilisée comme moyen de modification, et le moyen de modification présente un fondant de brasage sous atmosphère contrôlée (CAB).

2. Procédé selon la revendication 1, où le traitement de la pièce d'usinage est mis en oeuvre, tandis que le moyen de modification au moins au nombre de un, sous forme d'aérosol et / ou de vapeur, est placé au contact de la pièce d'usinage.

3. Procédé selon l'une des revendications précédentes, où le traitement de la pièce d'usinage est mis en oeuvre, tandis que la pièce d'usinage est plongée dans le moyen de modification au moins au nombre de un se présentant sous la forme d'une solution aqueuse, ou bien ladite pièce d'usinage est noyée par ce moyen de modification.

4. Procédé selon la revendication 1, 2 ou 3, où la pièce d'usinage modifiée en surface est dotée d'un système de revêtement organique ou anorganique.

5. Procédé selon la revendication 4, où le système de revêtement présente un biocide et / ou présente des propriétés hydrophiles ou hydrophobes.

6. Procédé d'assemblage par continuité de matière, d'au moins deux pièces d'usinage en aluminium, en magnésium, en cuivre ou dans un ou plusieurs alliages d'aluminium et / ou de magnésium et / ou de cuivre, comprenant les étapes a) d'approvisionnement des pièces d'usinage, b) d'assemblage des pièces d'usinage, les unes aux autres, réalisé par continuité de matière, comme le brasage ou le soudage, et c) de modification de surface d'au moins l'une des pièces d'usinage, où les étapes b) et c) sont exécutées simultanément, l'étape c) étant exécutée selon l'une quelconque des revendications 1 à 5.
